**Europäisches Patentamt**

**European Patent Office**

**Office européen des brevets**

(11) Veröffentlichungsnummer: **0 033 530**

**A1**

(12) **EUROPÄISCHE PATENTANMELDUNG**

(21) Anmeldenummer: **81100699.8**

(22) Anmeldetag: **31.01.81**

(51) Int. Cl.³: **F 24 J 3/04**

(30) Priorität: **04.02.80 YU 289/80**
**14.04.80 YU 1017/80**
**08.12.80 YU 1017/80**

(43) Veröffentlichungstag der Anmeldung:
**12.08.81 Patentblatt 81/32**

(84) Benannte Vertragsstaaten:
**AT CH DE FR GB IT LI NL SE**

(71) Anmelder: **E.G.O. Elektro-Geräte Blanc u. Fischer**

**D-7519 Oberderdingen(DE)**

(72) Erfinder: **Fokter, Karl Harald**
**Koroska C. 116**
**YU-62000 Maribor(YU)**

(74) Vertreter: **Patentanwälte Ruff und Beier**
**Neckarstrasse 50**
**D-7000 Stuttgart 1(DE)**

(54) Einrichtung zur Raumklimatisierung und/oder Wärmenutzung unter Verwendung von Umgebungsenergie.

(57) Ein Raumheiz- und Klimatisierungsgerät (11) besteht aus einem Speicher (15) für ein flüssiges Speichermedium auf Wasserbasis, außen am Gebäude angebrachten Wärmekollektoren (17) und Kühlern (22), einem ebenfalls als Wärmekollektor dienenden Fensterelement (14), im Raum (13) befindlichen Heizkörpern (16) und Kühlern (26). Die ganze Einrichtung kann als kompakte, größtenteils vormontierte Einheit aufgestellt werden und als Außenwandelement dienen. Je Raum ist eine Einheit vorgesehen.

Der Speicher (15) hat zwei übereinanderliegende, durch natürliche Wärmeschichtung und seitliche Einschnürungen (28) voneinander thermisch getrennte Bereiche (30,31) und eine im Speichermedium angeordnete Wärmepumpe (39). Das Fensterelement (14) enthält Absorptionskörper (67), die auf beiden Seiten unterschiedlich gefärbt sein können, und die durch die Strömung zwischen zwei Fensterscheiben (51) aufgewirbelt werden und somit, abhängig von der Strömungsgeschwindigkeit, Verdunklungs- und Absorptionseigenschaften übernehmen.

./...

FIG. 1

PATENTANWÄLTE **RUFF** UND **BEIER** STUTTGART

Dipl.-Chem. Dr. Ruff
Dipl.-Ing. J. Beier

Neckarstraße 50
D-7000 Stuttgart 1
Tel.: (0711) 227051*
Telex 07-23412 erub d

16. Januar 1981 JB/kh

Anmelder: E.G.O. Elektro-Geräte
Blanc u. Fischer, 7519 Oberderdingen

Einrichtung zur Raumklimatisierung
und/oder Wärmenutzung unter Verwendung von Umgebungsenergie

Die Erfindung betrifft eine Einrichtung zur Raumklimatisierung
und/oder Wärmenutzung unter Verwendung von Umgebungsenergie mit
einem Speicher für flüssiges Speichermedium und daran angeschlossenen Wärme- und Kälteverbrauchern, und mit wenigstens einem
Wärmekollektor und einer Wärmepumpe mit einem Kondensator und
einem Verdampfer.

## Stand der Technik:

Obliche Einrichtungen dieser Art bestehen aus Sonnenkollektoren,
die auf dem Dach eines Gebäudes angebracht sind, während die zugehörigen Wärmespeicher in den Kellern stehen. Diese Anlagen bedingen eine sehr aufwendige Installation und werden daher nur selten eingebaut. Außerdem arbeiten die bekannten Systeme meist nur
mit einem Speicher, der von dem Wärmekollektor mit Wärmemedium
niederer Temperatur beaufschlagt wird oder mit einem Speicher,
der das von der Wärmepumpe auf ein höheres Temperaturniveau gebrachte Medium speichert. Bei diesen Systemen muß die Wärmepumpe normalerweise dann laufen, wenn der Wärmeanfall am Wärmekollektor groß genug bzw. wenn die meiste Wärme entnommen wird.
Dies ist während des Tages der Fall, so daß die Wärmepumpe mit
teurem Tagstrom betrieben werden muß.

Es sind ferner aus den US-PS 3 107 052 und 4 127 102 sowie der
DE-OS 28 15 056 Fenster bekannt geworden, die zwischen zwei
Fensterscheiben einen von einem Wärmeträgermedium durchströmten Raum abgrenzen. Dabei ist die Einbringung einer Färbung
oder anderer Partikel in das Wärmeträgermedium vorgesehen, die
(US-PS 3 107 052) mit einem Filter oder Klärgefäß (settling
tank) wieder entfernt werden kann.

Es ist ferner aus der US-PS 4 050 443 bekannt, durch einen
Zwischenraum im Fenster Luft als Wärmeträgermedium zu blasen.

### Kurze Zusammenfassung der Erfindung:

Aufgabe der Erfindung ist es, eine  Einrichtung der eingangs
erwähnten Art zu schaffen, die es ermöglicht, eine einfache
kompakte Einheit herzustellen, die auch dezentral verwendbar
ist und unter vollständiger oder teilweiser Nutzung von Umweltenergie arbeitet. Besonders erwünscht ist dabei ein Einsatz
auch zur Klimatisierung von Räumen.

Diese Aufgabe wird gemäß der Erfindung dadurch gelöst, daß die
Einrichtung einschließlich des Speichers eine dezentrale, im
zu klimatisierenden Raum aufstellbare bzw. montierbare Einheit
ist, an die der Wärmekollektor anschließbar ist, und daß der
Speicher in zwei Behälterbereiche für Speichermedium mit hoher
und niedriger Temperatur (Warmbereich und Kaltbereich) aufgeteilt ist, die miteinander verbunden sind, daß der Kondensator

A 18 906 US                    - 3 -

im Warmbereich und der Verdampfer zumindest teilweise im Kaltbereich liegt.

Eine solche Einrichtung kann in großen Stückzahlen günstig
gefertigt werden und ohne großen Installationsaufwand in dem
zu klimatisierenden Raum aufgestellt werden. Es ist sogar möglich, die Einheit als Wandelement auszubilden, wobei der Speicher also einen Teil der Außenwand des Raumes bildet. Während
im übrigen vorzugsweise die Raumheizkörper direkt an den
Speicherbehälter montiert sind, könnten in diesem Falle auch die
Wärmekollektoren bereits fertig vormontiert sein und unter anderem auch ein von Wärmeträgermedium durchströmtes Fenster umfassen.

Besonders vorteilhaft ist eine Ausführung, bei der der Warmbereich vertikal über dem Kaltbereich im gleichen Behälter ohne
dichte Trennung vorgesehen ist. Ihre Verbindungsöffnung kann
lediglich aus einer Einschnürung  des Behälters bestehen. Diese
Ausführung ermöglicht es neben baulichen Vorteilen, daß ohne besondere Regelungsanlagen und Umwälzpumpen automatisch beide Behälterbereiche zur Speicherung der Umweltenergie herangezogen werden, falls diese in großem Umfang zur Verfügung steht, während
anderenfalls eine Trennung des Kaltbereiches von dem Warmbereich
ebenfalls automatisch erfolgt.

Vorzugsweise kann die Einrichtung mit einem neuartigen Fensterelement verwendet werden, das einen Wärmekollektor dadurch bilden
kann, daß der Innenraum zwischen zwei Fensterscheiben von einem
flüssigen Wärmeträgermedium durchströmt wird und Absorptionskörper mit von dem Wärmeträgermedium unterschiedlichem spezifischem Gewicht in von der Strömungsgeschwindigkeit abhängiger
Menge in das Wärmeträgermedium einbringbar und von diesem zur
Wiederverwendung trennbar sind. Es besteht die Möglichkeit, durch Regelung der Strömungsgeschwindigkeit den Anteil der Absorptionskörper für Licht und Wärme in dem Wärmeträgermedium, das vorzugsweise farblos und durchsichtig sein sollte, zu ändern, so daß
einerseits eine regel- und steuerbare teilweise Verdunklung des
Fensters vorgenommen werden kann, die einen anderen Sonnenschutz am Fenster ersetzt und andererseits die von den Absorptionskörpern aufgenommene und an das Wärmeträgermedium weitergeleitete
Energie nutzbringend verwendet werden kann. Damit wirkt die
Einrichtung auch als Klimagerät, weil die Energieeinstrahlung
durch das Fenster erheblich vermindert wird. Die dabei gewonnene
Wärme kann entweder, gegebenenfalls mittels einer Wärmepumpe,
die in diesem Falle als Kälteaggregat arbeitet, nach
außen abgegeben oder, was insbesondere in Gegenden mit großen
Temperaturunterschieden zwischen Tag und Nacht wichtig ist,
zu Heizzwecken oder zur Warmwasserbereitung herangezogen werden.

Diese Absorptionskörper können so bemessen sein, daß sie sich in
dem Spalt zwischen den beiden Fensterscheiben nicht frei drehen
können, so daß man ihre beiden Seiten mit unterschiedlichen Absorptionseigenschaften versehen kann, beispielsweise nach außen
schwarz und nach innen metallisiert, so daß die Strahlung in
den Raum hinein vermindert wird oder der Raum hell bleibt.


## Zeichnungs-Kurzbeschreibung:

Weitere Vorteile und Merkmale der Erfindung gehen aus den
übrigen Unteransprüchen und der Beschreibung im Zusammenhang
mit den Zeichnungen hervor. Einige Ausführungsbeispiele der Erfindung sind in den Zeichnungen dargestellt und werden im folgenden näher erläutert. Es zeigen:

Fig. 1  einen Vertikalschnitt durch eine Einrichtung nach
        der Erfindung,

Fig. 2  eine von rechts gesehene Ansicht der Einrichtung nach
        Fig. 1,

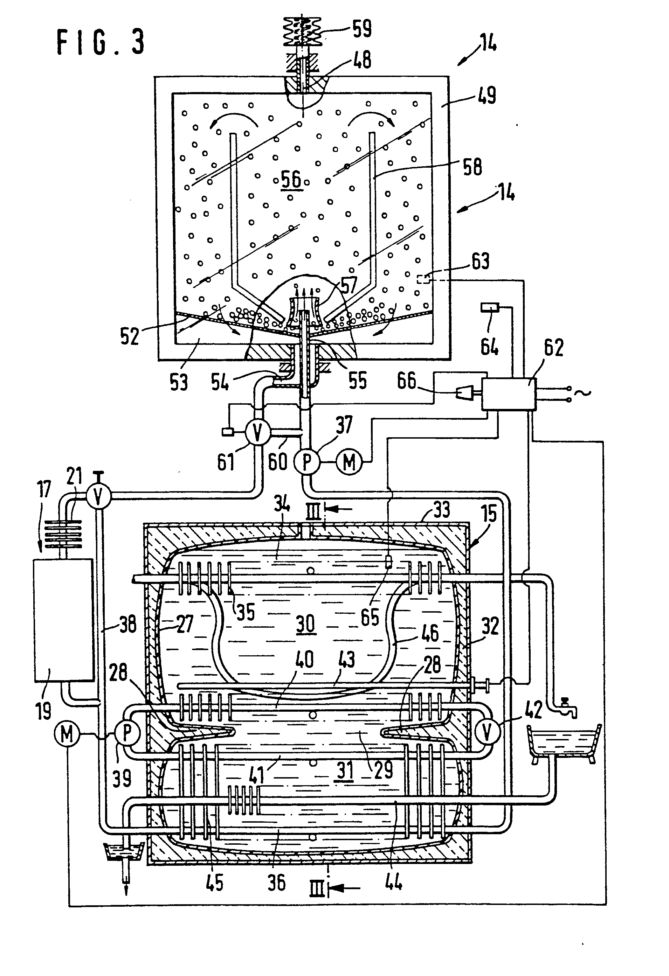

Fig. 3  eine schematische Darstellung der Einrichtung nach
        Fig. 1 und 2,

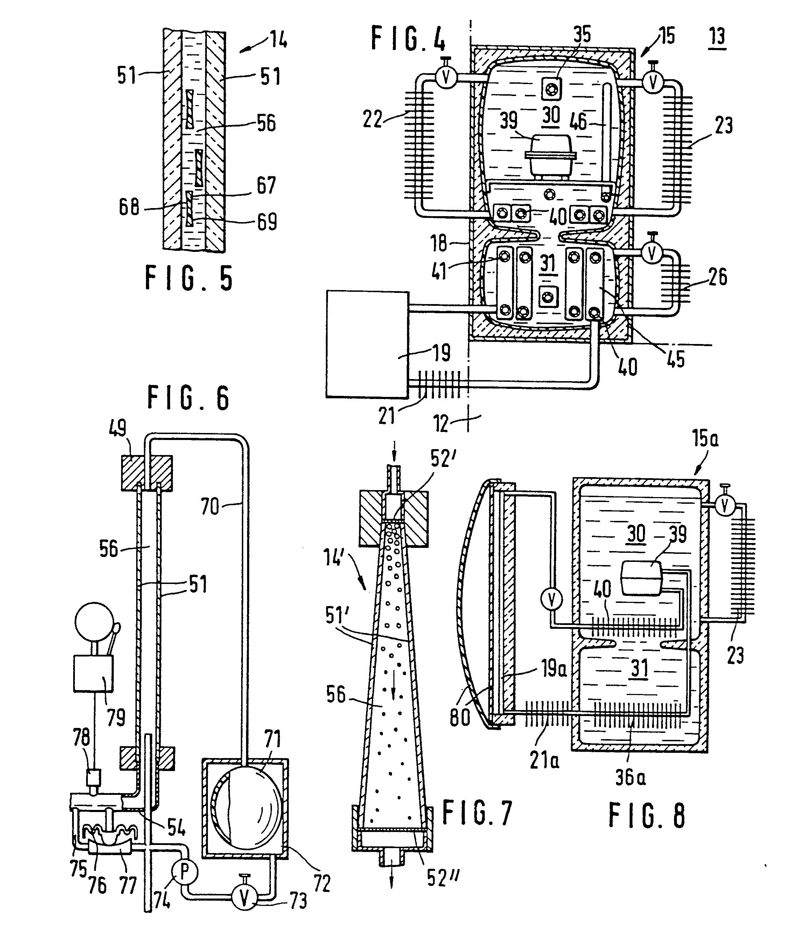

Fig. 4  einen schematischen Schnitt durch den in Fig. 3 dargestellten Speicher nach der Linie IV-IV in Fig. 3,

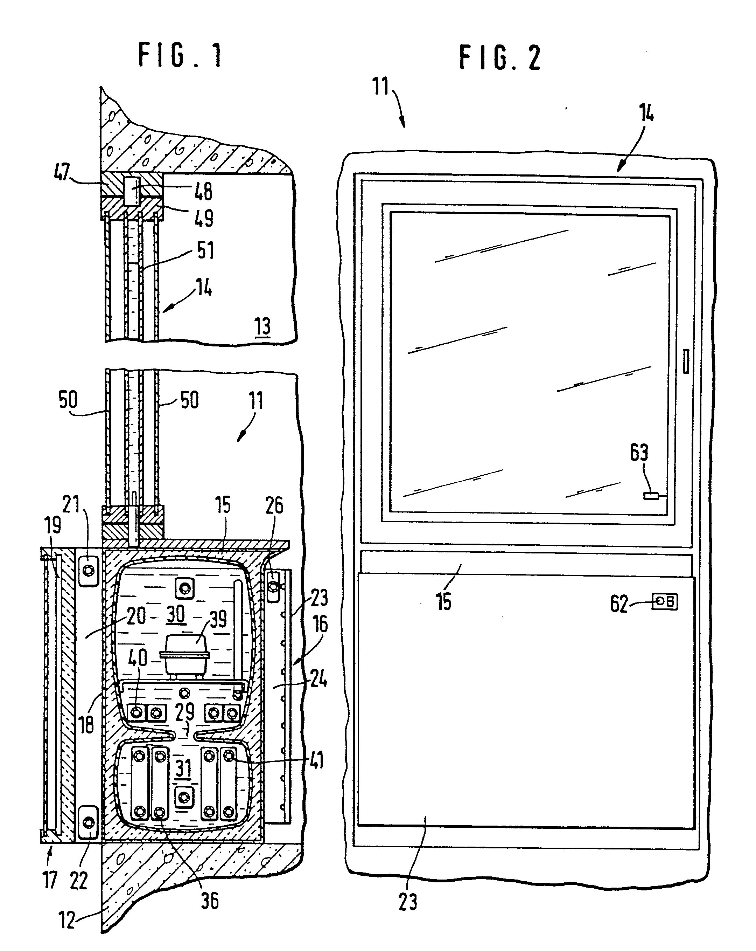

Fig. 5  ein Detail eines in den Figuren 1 und 3 dargestellten
        Fensters im Schnitt,

Fig. 6  eine Einrichtung zum Füllen und Entleeren des
        in den Figuren 1 bis 3 dargestellten Fensters,

Fig. 7  einen schematischen Vertikalschnitt durch eine andere
        Ausführungsform eines Fensters und

Fig. 8  eine schematische Darstellung einer abgewandelten Ausführungsform einer Einrichtung nach der Erfindung.

Fig. 1 zeigt eine Einrichtung 11 zum Raumklimatisieren und zur
Nutzung von Umgebungswärme, die als vormontierbare Einheit in
Form eines Außenwandelementes ausgebildet ist. Sie bildet die
Außenwand eines Innenraumes 13 eines Gebäudes 12 und besteht aus
einem Fensterelement 14, einem darunter angeordneten, die Außenwand bildenden Speicherbehälter 15, inneren Raumheiz- und
Klimatisierungselementen 16 und einem Wärmekollektor 17, der
einen als Fassadenelement ausgebildeten, mit Abstand vor der

0033530

durch die Wand des Speicherbehälters 15 gebildeten Außenwand 18 des Gebäudes angeordneten Platten-Sonnenkollektor 19 und einem im oberen oder mittleren Bereich entstehenden Spaltes 20 angeordneten Konvektions-Wärmeaustauscher 21 besteht.

Im unteren Bereich dieses Spaltes ist ein Konvektions-Wärmeaustauscher als Kühler 22 angeordnet. Die Raumheiz- und Klimaelemente bestehen aus einem Platten-Raumheizkörper 23, der ebenso wie auf der Außenseite der Sonnenkollektor 19 mit einem Abstand 24 parallel vor der Innenwand des Speicherbehälters 15 angeordnet ist. In dem Abstandsspalt 24 ist im oberen oder mittleren Bereich ein Konvektions-Wärmeaustauscher als Kühlelement 26 angeordnet, das eine übliche, nicht dargestellte Kondenswasserauffang- und -ableitungsvorrichtung haben kann. Die Konvektions-Wärmeaustauscher können übliche Rippenrohre sein.

Der Speicherbehälter 15, dessen Form auch aus den Figuren 3 und 4 zu erkennen ist, hat die Form eines außen im wesentlichen rechteckigen Behälters mit größeren Längen- und Höhenabmessungen als Dickenabmessungen, so daß er nicht sehr weit in den Raum 13 hineinragt. Seine Innenwand 27 ist ein Kunststoff-Blasformteil, beispielsweise aus Polypropylen, und ist in leichter Abweichung von der Form eines rechteckigen Kastens mit balligen Außenflächen geformt, hat jedoch etwa auf einem Drittel seiner Höhe eine Einschnürung 28, die den Behälter taillenförmig bis auf eine schlitzförmige Verbindungsöffnung 29 in einen oberen Warmbereich mit etwa zwei Drittel des Volumens und einen unteren Kaltbereich mit etwa ein Drittel des Volumens des Speicherbehälters 15 unterteilt. Die Innenwand 17 ist mit einer Isolierung 32 aus Schaumkunststoff, beispielsweise Polyurethanschaum, umgeben und mit einer Außenverkleidung 33 versehen.

Warm- und Kaltbereich des Speicherbehälters 15 sind mit einem flüssigen Speichermedium 34 gefüllt, das überwiegend aus Wasser besteht und gegebenenfalls mit korrosionsschützenden und/oder
gefrierpunktssenkenden Zusätzen, z.B. üblichen Frostschutzmitteln, vermischt ist. Das Speichermedium steht in dem Behälter unter atmosphärischem Druck und kann durch eine Füllöffnung
erst nach der Aufstellung des Speicherbehälters eingefüllt werden, so daß dessen Transport einfach ist..

Der Raumheizkörper 23 ist mit seinem Vor- und Rücklauf an den
Warmbereich 31 des Speichers angeschlossen, desgleichen der
Kühler 22 (Fig. 4). Sie können nach dem Thermosiphon-Prinzip
arbeiten oder von einer nicht dargestellten Umwälzpumpe gespeist werden. An den Kaltbereich 31 ist in gleicher Weise das
Innen-Kühlelement 26 über eine Umwälzpumpe angeschlossen. Als
weiterer Verbraucher ist im oberen Teil des Warmbereiches 30
ein Wärmetauscher 35 für die Erwärmung von Brauchwasser vorgesehen. Die direkt mit dem Speichermedium betriebenen Heiz-
und Kühlelemente könnten auch über Wärmetauscher indirekt an
den Speicher angeschlossen sein.

Nahe dem Boden des Kaltbereiches 31 des Speichers ist ein Wärmetauscher 36 angeordnet, der zu einem Wärmekollektorkreis gehört. In diesem liegt eine regelbare Umwälzpumpe 37, das von
einem flüssigen Wärmeträger durchströmte Fensterelement 14 und
der Konvektions-Wärmetauscher 21 mit vor- oder nachgeschaltetem
Platten-Sonnenkollektor 19. Beide Wärmekollektoren 19, 21
können über eine  Bypass-Leitung 38 überbrückt werden.

In Fig. 1 ist eine in Fig. 3 nur schematisch dargestellte Wärmepumpe 39 gezeigt, die aus einem handelsüblichen, gekapselten
Kompressor/Elektromotor-Aggregat besteht, wie es beispielsweise
von der Firma Danfoss, DK 6430 Nordborg / Dänemark,
geliefert wird.  Es handelt sich um ein hermetisch geschlossenes
Aggregat, in das lediglich die Anschlüsse für das verwendete Kältemittel und die elektrischen Anschlüsse hineinführen. Das Wärmepumpenaggregat 39 ist im mittleren bis unteren Teil des Warmbereiches des Speichers,vom Speichermedium umspült,auf einer
Traverse angeordnet. Dadurch wird nicht nur für eine wirksame
Kühlung bzw. Abführung der im Kompressoraggregat erzeugten Wärme
gesorgt, sondern auch für eine wirksame Schalldämmung sowie
einen kompakten und wenig störenden Einbau. Die Wärmepumpe besitzt einen Kondensator in Form eines im unteren Teil des Warmbereiches des Speichers angeordneten Wärmeaustauschers, dessen
Rohre möglichst weit entfernt von der Verbindungsöffnung 29
dicht über der Einschnürung 28 angebracht sind, während die
Wärmeaustauscherrohre des Verdampfers 41 in gleicher Weise unterhalb der Einschnürung, d.h. im oberen Teil des Kaltbereiches 31
angeordnet sind. In dem Kondensator der vergleichbar einem normalen Kompressions-Kälteaggregat ausgebildeten Wärmepumpe wird
das verdichtete Kältemittel unter Wärmeabgabe kondensiert, danach in dem Drosselventil 42 (Fig. 3) entspannt und verdampft
unter Wärmeaufnahme im Verdampfer 41. Der Wärmekreislauf wird
durch die Kompression der Kältemitteldämpfe im Kompressor der
Wärmepumpe geschlossen. In dem Speicherbehälter ist ferner eine
Zusatzheizung in Form eines elektrischen Rohrheizkörpers 43
im unteren Teil des Warmbereiches 30 angeordnet. Falls andere
Wärmequellen zur Verfügung stehen, beispielsweise eine Warmwasserheizung, könnte hier auch ein entsprechender Wärmetauscher eingebaut werden. Im Kaltbereich 31 kann ein Wärmetauscher 44 angeordnet sein, der von einer Flüssigkeit relativ
geringer Temperatur durchströmt ist, die von einer "Abfallwärme"-Quelle stammt, beispielsweise Abwasser. Hier wäre es
auch möglich, andere Abwärme zu verwerten, beispielsweise Abwärme von Kraftwerken, die über unisolierte Einrohrleitungen
herangeführt werden könnte.

Die Wärmetauscherrohre 36 des Kollektorkreislaufs und des Verdampfers 41 sind über Wärmeverteilungs- und -verbindungsplatten oder -rippen 45 miteinander verbunden, die für eine ausreichende Wärmeverteilung sorgen, auch wenn im Kaltbereich 31 das Speichermedium in Eis umgesetzt wird, so daß die hohe Schmelzwärme von Wasser zur Erhöhung der Speicherkapazität herangezogen werden kann.

Im Warmbereich befindet sich noch eine $\Omega$ -förmige Wärmeaustauscherschlaufe 46, die im oberen Teil liegende Anschlüsse hat und in der Mitte bis in den unteren Teil des Warmbereichs 30 herunterreicht. Diese Austauscherschlaufe ist dazu vorgesehen, bei der Anordnung von mehreren Einrichtungen 11 eine Vergleichmäßigung der Temperaturen im Warmbereich des Speichers zu ermöglichen, in dem eine Wärmeträgerflüssigkeit durch die Austauscherschlaufen geschickt wird. Dabei wird sichergestellt, daß alle Bereiche der im folgenden noch erläuterten Temperaturschichtung im Warmbereich zum Wärmeausgleich erfaßt werden. Durch den Wärmeausgleich ist es möglich, Räume mit schlechteren Bedingungen für den Wärmekollektor, etwa an Nordwänden, auf Kosten der übrigen Räume besser zu heizen.

Das Fensterelement 14 besitzt einen Blendrahmen 47, in dem um eine vertikale Mittelachse 48 schwenkbar ein Flügelrahmen 49 angebracht ist, in den Fensterscheiben eingesetzt sind, und zwar zwei äußere Fensterscheiben 50 und zwei innere Fensterscheiben 51 (s. auch Fig. 5), die parallel zueinander verlaufen und zwischen sich einen Innraum von relativ geringer Dicke zwischen 2 und 4 mm, vorzugsweise 3 mm, bilden. Im unteren Bereich des Flügelrahmens ist ein Sieb 52 (Fig. 3) flach V-förmig angeordnet, so daß unter ihm ein Absaugraum 53 geschaffen wird, der über eine zur Achse 48 konzentrische Leitung 54, die zum Wärmekollektorkreis gehört, an die Wärmekollektoren 19, 21 angeschlossen ist. Konzentrisch innerhalb der Leitung 54 ist eine Wärmeträger-Zuführungsleitung 55 angeordnet, die durch das Sieb hindurch in den Innenraum 56 zwischen den Fensterscheiben 51 hineinragt. Die Leitungen 54, 55 sind
durch flüssigkeitsdichte Schläuche oder Gelenke so angeordnet,
daß sie ein Schwenken des Fensterflügels gestatten. Es könnte
auch noch eine horizontale Achse vorgesehen sein, die ein
Schwenken des Fensters in eine schräge Lüftungsstellung gestattet, wobei die Kollektorwirkung des Fensters wegen der
günstigen Stellung zur Sonne besonders ausgeprägt ist.
In einen erweiterten Raum des Flügelrahmens mündet
das Ende der Zuführleitung 55 und ist von
einem Venturirohr 57, d.h. einem kurzen, in der Mitte verengten
Rohrstück mit Abstand umgeben, das mit seiner unteren Mündung
kurz über dem Sieb 52 endet. Beide Fensterscheiben 51 sind durch
Verbindungsstege 58 miteinander verbunden, die in kurzem Abstand vom Venturirohr beginnen, schräg und dann vertikal aufwärts verlaufen, um mit einigem Abstand vor der Oberkante des Fensters zu enden. Die Verbindungsstege können
transparente, zwischen die Fensterscheiben eingeklebte Stege
aus Plexiglas oder dgl. sein, die einerseits die beiden
Scheiben gegeneinander abstützen und andererseits Strömungsleitstege in dem Innenraum 56 bilden. Sie sollten aus einem
Material    mit    gleichem optischem Brechungsindex sein wie
das Wärmeträgermedium, das in dem Wärmekollektorkreis fließt.

In Verbindung mit dem oberen Bereich des Fensters, beispielsweise angrenzend an die obere Schwenkachse 48, ist ein Unterdruck erzeugendes Ausdehnungsgefäß 59 angeordnet, das einerseits eine gewisse Ausdehnung der Flüssigkeit zuläßt, jedoch
in dem Innenraum 56 und damit im gesamten Wärmekollektorkreis
einen Unterdruck, d.h. einen geringeren Druck als den Atmosphärendruck, aufrechterhält. Dies kann beispielsweise mit einer
selbstfedernd   oder unter Federwirkung nach außen gedrückten
Membran an dem Ausdehnungsgefäß erreicht werden. Eine Verbin-

0033530

dungsleitung 60 mit einem Elektromagnet-Dreiwegeventil 61 ermöglicht es, den Wärmekollektorkreis unter Ausschaltung des Fensterelementes 14 zu betreiben.

Ein zentrales Steuergerät 62 ist an das Haushaltsstromnetz angeschlossen und steuert bzw. regelt die Einrichtung. Dazu sind am Fenster Lichtfühler, im Inneren des Raumes 13 ein Temperaturfühler 64 und im Warmbereich 30 des Speichers ein Temperaturfühler 65 vorgesehen. Es könnte ferner ein Außentemperatur-Fühler zur Steuerung der Speicheraufladung in Abhängigkeit von den tatsächlichen Außentemperaturen und im Steuergerät eine Nachtstromschalteinrichtung vorhanden sein, die die Zusatzbeheizung 43 und/oder die Wärmepumpe ausschließlich oder bevorzugt in verbrauchsarmen Nachtzeiten mit günstigem Stromtarif einschaltet. Das Steuergerät ist über ein Einstellorgan 66 einstellbar. In Abhängigkeit von der auf das Fenster auffallenden oder durch dieses hindurchgelassenen Lichtmenge und der Einstellung des Einstellorgans 66 wird der Motor der Umwälzpumpe 37 unterschiedlich schnell betrieben, so daß die durch den Innenraum 56 des Fensters hindurchgepumpte Wärmeträgermenge unterschiedlich ist. Der transparente Wärmeträger auf Wasserbasis mit Frostschutz- oder Korrosionszusätzen nimmt bei seinem Durchströmen des Venturirohrs nach Art einer Wasserstrahlpumpe Absorptionskörper 67 mit, die auf dem Sieb liegen. Sie bestehen, wie aus Fig. 5 zu erkennen ist, aus flachen, leicht bikonkav ausgebildeten Scheibchen mit kreisrunder Grundfläche, die aus Kunststoff oder ähnlichem Material bestehen, das ein spezifisches Gewicht hat, das etwas größer ist als das des Wärmeträgermediums. Die Abmessungen der Grundfläche der Absorptionskörper 67 sind größer als der Abstand zwischen den beiden Fensterscheiben 51, so daß die plättchenförmigen Absorptionskörper mit ihren äußeren und inneren Flächen 68, 69 stets der gleichen Fensterscheibe zugekehrt bleiben. An diesen Flächen sind sie unterschiedlich gefärbt oder beschichtet, und zwar vorzugsweise zum äußeren des
Fensters mit einem Material mit hohem Strahlungs-Absorptionskoeffizienten (geschwärzt), während der Absorptionskoeffizient auf der Innenseite möglichst klein ist (Idealfall: verspiegelt). Die bikonkave Form sorgt dafür, daß die
nur wenige Zentelmillimeter dicken Absorptionsköper
sich nicht zwischen den Fensterscheiben verkeilen.
Durch Zusätze im Wärmeträgermedium kann
auch eine gute Schmierfähigkeit dieses Mediums erreicht werden,
so daß diese Gefahr gering ist. Bei Verwendung des Fensters in heißen
Gegenden werden die Absorptionskörper mit der verspiegelten Seite nach außen eingebracht.

Im folgenden wir die Funktion des Ausführungsbeispiels nach den
Figuren 1 bis 5 beschrieben:

Wenn die Umlaufpumpe 37 in Gang gesetzt wird, so saugt das
Venturirohr Absorptionskörper 67, die aufgrund ihres größen
spezifischen Gewichts im Ruhezustand auf dem Sieb 52 liegen,
dessen Maschenweite geringer ist als die Abmessung der Absorptionskörper 67, durch das Venturirohr hindurch in die Strömung.
Sie werden in einem gleichmäßigen Verhältnis dem Wärmeträgermedium beigemischt, strömen  zwischen den Verbindungsstegen 58
aufwärts und dann außen wieder herunter.
Das durchsichtig klare Wärmeträgermedium strömt dann durch das
Sieb und den Absaugraum 53 in die Leitung 54 ab. Durch die bei
unterschiedlichen Strömungsgeschwindigkeiten unterschiedliche
Saugwirkung der durch das Venturirohr gebildeten Einrichtung
zur Beimischung der Absorptionskörper ist auch der Beimischungsgrad unterschiedlich, so daß bei geringen Strömungsgeschwindigkeiten der Hauptteil der Absorptionskörper auf dem Sieb 52
liegt, das      in einem vom Fensterrahmen überdeckten Bereich
liegt, während bei hoher Strömungsgeschwindigkeit nahezu alle
Absorptionskörper der Flüssigkeit beigemischt sind und somit die
Fensterscheibe mehr oder weniger verdunkeln. Durch entsprechende Strömungsführung kann eine gleichmäßige Abdeckung erreicht
werden oder es können bewußt interessante Bewegungen hervorgerufen werden, die auch nach Art von Lichtspielen interessant
sein können. Dabei wird die Innenseite des Fensters wegen der
rückstrahlenden Rückseite der Absorptionskörper nicht sehr
stark abgedunkelt, sondern es wird nur die Lichtstrahlung von
außen wie gewünscht vermindert und die Wärmestrahlung sehr weitgehend absorbiert. Dabei wird die Wärmestrahlung, die auf die
Absorptionskörper selbst fällt, völlig absorbiert und vom
Wärmeträgermedium abtransportiert, jedoch auch die Wärmestrahlung, die durch das Wärmeträgermedium hindurchfällt, sowie alle
in den inneren Fensterscheiben absorbierte Wärme wird abtransportiert. Die äußeren Fensterscheiben 50 dienen zur Isolation
des durchströmten Innenelementes gegen Konvektion. Hierbei ist
insbesondere die innere Scheibe von Interesse, weil sie bei
Klimatisierung (Raum 13 kälter als Außen- und Wärmeträgertemperatur) die unerwünschte konvektive Wärmeabgabe an das
Wärmeträgermedium vermeidet und bei Heizbetrieb (Raum wärmer
als Außenluft und Wärmeträger) die Wärmeabgabe von innen an
den Wärmeträger vermindert.

Je nach Menge und Größe der eingebrachten Absorptionskörper
kann der maximale Verdunklungsgrad bestimmt werden. Wenn die
Durchströmung des Fensters ausgeschaltet oder auf ein Minimum
reduziert wird, dann fallen alle Absorptionskörper auf das
Sieb zurück, und die Scheibe ist wieder klar und durchsichtig.

Die Absorptionskörper können auch andere Formen haben, beispielsweise eine viereckige Form mit abgerundeten Ecken und
auch parallelflächig begrenzt sein. Falls man auf die unterschiedliche Absorptionswirkung innen und außen verzichten will,
dann ist es auch möglich, z.B. kugelig geformte Absorptionskörper zu verwenden.

Durch dieses Fensterelement wird erreicht, daß nicht nur der
Wärmeanteil der durch das Fenster fallenden Lichtstrahlung
weitgehend ausgefiltert wird, sondern auch bei starker Sonneneinstrahlung der unerwünscht hohe Lichteinfall in Wärme umgesetzt und durch das Wärmeträgermedium abtransportiert wird.
Dadurch wirkt das Fenster auf den Raum klimatisierend, wobei
der Klimatisierungsanteil ebenso wie die Helligkeit leicht
regelbar ist. Die Wärme wird in den Speicher 15 transportiert,
und zwar über den Wärmetauscher 36 in den Kaltbereich. Dabei
wird der Wärmeträger in den Wärmekollektoren 21 und 19 normalerweise noch zusätzlich erwärmt. In kalten Gegenden und bei geringer Außentemperatur wird die Temperatur im Kaltbereich des
Speichers nicht so hoch sein, daß sie unmittelbar nutzbringend
verwendet werden kann. Die Wärmepumpe 39 sorgt dafür, daß der
Temperaturunterschied zwischen dem Kaltbereich und dem Warmbereich des Speichers erhöht wird, so daß im Warmbereich ausreichend Wärme für Raumbeheizung und Brauchwasser etc. zur
Verfügung steht.

Die Wärmepumpe 39 wird vorzugsweise in den verbrauchsärmeren
Nachtzeiten an das Stromnetz angeschlossen, so daß sie
mit billigem Nachtstrom arbeiten kann. Sie schafft also einen
doppelten Vorteil: Durch die Leistungszahl, die zwar mit den
Bedingungen wechselt, jedoch mit Sicherheit über 3 liegt, macht
sie     ein Vielfaches an Wärmeenergie nutzbar, als es
ihrem Leistungsverbrauch   entspricht, und durch die Verwendung
von Nachtstrom schafft sie einen weiteren finanziellen und
gesamtwirtschaftlichen Vorteil. Dabei kann der Inhalt des Kaltbereiches 31 durch den Verdampfer der Wärmepumpe bis in den Eisbereich abgekühlt werden, so daß die Schmelzwärme als zusätzliche Speicherwärme zur Verfügung steht. Aus diesem Grunde kann
der Kaltbereich volumenmäßig geringer sein (etwa halb so
groß wie der Warmbereich).

In Gegenden, in denen sehr hohe Tagestemperaturen, jedoch geringe Nachttemperaturen herrschen, ist das Fensterelement von besonderem Vorteil. Dort wird man während des Tages mit dem Wärmeträger des Kollektorkreises (durch Schaltung der By-Pass-Leitung 38)mit oder ohne zusätzliche Wärmekollektoren 19, 21 den Speicherinhalt insgesamt auf eine hohe Temperatur bringen, ohne die Wärmepumpe zu betätigen. Man hat dann ausreichend Wärmeenergie für Brauchwasser und für eine Heizung in den Nachtstunden. Falls in den Nachtstunden keine Heizung erforderlich ist, so kann über den Kühler 22 (Fig. 1 und 4) in der Nachtzeit die Wärme abgegeben werden. Hierbei wirkt also die Einrichtung als kombinierte Klima- und Heizeinrichtung, die keinen wesentlichen Energiebedarf hat.

Durch die beschriebene Gestaltung des Speichers mit übereinander angeordnetem Warm- und Kaltbereich und einer zwar gegenüber der sonstigen Basisfläche kleinen, jedoch ständig offenen Verbindungsöffnung 29 ist es möglich, die unterschiedlichen Betriebsweisen durchzuführen, ohne daß man zusätzliche Regelungen oder Umwälzpumpen benötigt. Solange die Temperatur im Kaltbereich wesentlich niedriger ist als die im Warmbereich, d.h. wenn entweder die Wärmepumpe oder die Zusatzheizung 43 oben eine wesentlich höhere Temperatur erzeugt als unten, tritt automatisch eine stabile Temperaturschichtung zwischen oben und unten ein. Aufgrund der Tatsache, daß Wasser zwar eine sehr hohe spezifische Wärme, jedoch ein geringes Wärmeleitvermögen hat, ist es so möglich, ohne wesentliche Verluste im Kaltbereich Eis und im oberen Warmbereich 70°C warmes Wasser zu haben. Die vorzugsweise isolierte Einschnürung sorgt für eine weitere Trennung und geringe Verluste durch Wärmeausgleich. Man hat also den Vorteil, daß einerseits eine sehr weitgehende Trennung der Bereiche vorhanden ist, andererseits aber in dem Fall, daß über den Wärmetauscher 36 eine erhebliche Erwärmung erfolgt, die die Temperatur im Warmbereich erreicht oder überschreitet, sich automatisch durch Thermosiphonwirkung die
Wärme bis in den Warmbereich fortpflanzt, während anderenfalls
diese Umwälzung durch die thermische Schichtung unterbunden
ist. Um die thermische Schichtung möglichst wenig zu stören, sind
die Wärmeaustauschrohre des Kondensators und Verdampfers der
Wärmepumpe in den Ecken nahe angrenzend an der Einschnürung
angeordnet, so daß sie nicht saugend im Bereich der Verbindungsöffnung 29 wirken. Ober den Wärmetauscher 44 kann häusliche oder
andere Abfallwärme in den Kaltbereich geleitet werden und somit
das Wärmeangebot für die Wärmepumpe erhöhen.

Beim Betrieb in sehr heißen Gegenden könnten u.U. die Wärmekollektoren 19, 21 ganz entfallen und lediglich das auch als
Wärmekollektor wirkende Fensterelement im Kollektorkreis vorgesehen sein. In diesem Falle würde das Fensterelement nach Art
einer Klimaanlage arbeiten, d.h. die im Speicher 15 gespeicherte
Wärme würde mittels der  Wärmepumpe
über den Kühler 22
nach außen abtransportiert werden. Zusätzlich könnte der Innenkühler 26 zur Abkühlung des Innenraums sowie in üblicher Weise
zur Entfeuchtung der Luft verwendet werden. Auch hier bleibt
der Vorteil erhalten, daß zumindest ein großer Teil der Arbeit
der Wärmepumpe mit günstigem Nachtstrom betrieben werden kann
und dann am Tage der Speicher als Kältespeicher für die Kühlung
zur Verfügung steht.

Durch Betätigung des Dreiwegeventils 61 kann das Fensterelement 14
aus dem Wärmekollektorkreis ausgeschaltet werden, wenn ausschließlicher  Betrieb mit den Außenkollektoren 17 erwünscht
ist. Ebenso könnte eine zusätzliche Umwälzpumpe vorgesehen sein,
die nur das Fensterelement 14 betreibt, wenn dieses nur zu
reinen Verdunklungszwecken, beispielsweise am Abend und ohne
wesentliche Wärmeaufnahme arbeiten soll.

Es ist zweckmäßig, die Wärmepumpe nur so auszulegen, daß
sie für durchschnittliche Heiz- oder Kühlbedingungen ausreicht. Wenn die Außentemperaturen so gering sind, daß das
Wärmeangebot der Wärmekollektoren nicht ausreicht und die
Wärmepumpe keine ausreichend hohe Temperatur im Wärmebereich
erzeugen kann, so kann vorgewählt werden, daß der Zusatzheizkörper 43, ebenfalls mit Nachtstrom betrieben, eingeschaltet wird, so daß der Nachtwärmebedarf sofort gedeckt werden
kann und morgens ein mit warmem Speichermedium gefüllter
Speicher zur Verfügung steht. Es ist auch möglich, während
des Tages über den elektrischen Heizkörper 43 Wärme nachzuschießen, wenn die Außentemperaturen so niedrig sind, daß die
zweckmäßig auf Durchschnittswerte ausgelegte Anlage sonst
nicht ausreichen würde. Da erfahrungsgemäß derartig extreme
Tage nur einen geringen Bruchteil der Gesamtzeit ausmachen
und die Zusatzbeheizung einfach und für so geringe Zeit auch
wenig kostspielig ist, ist dies günstiger als eine größere,
nur selten voll genutzte Anlage.

In Fig. 6 ist eine in Fig. 3 zur besseren Übersichtlichkeit
nicht dargestellte Vorrichtung zur Befüllung und Entleerung
des Fensterelementes 14 gezeigt. Der Innenraum 56 zwischen
den Fensterscheiben 51 ist in seinem oberen Teil über ein
Rohr 70 mit einer elastischen Blase 71 verbunden, die in einem
Sammelgefäß 72 liegt. Das Sammelgefäß ist über einen Hahn 73
und eine Füllpumpe 74 an die Leitung 54 im Wärmeträgerkreislauf angeschlossen. Im gefüllten Zustand des Raumes 56 zwischen
den Fensterscheiben ist die Blase 71 mit Luft gefüllt und
nimmt nahezu den ganzen Raum des Sammelgefässes 72 ein. Wird
der Hahn 73 geöffnet, so kann das Wärmeträgermedium durch die
stillstehende Pumpe 74 in das Sammelgefäß 72 laufen, während
die Luft aus der Blase 71 in den Raum 56 einströmt. Zum Füllen
wird die Pumpe 74 betätigt, wobei die Luft in die sich wieder
ausdehnende Blase zurückströmt. So ist es möglich, die Entleerung und Befüllung unter Aufrechterhaltung des Innendruckes, der für eine relativ geringe Belastung der Fensterscheiben 51 sorgt, vorzunehmen.

Der Kreislauf des Wärmeträgermediums im übrigen Kollektorkreis kann durch eine Bypass-Leitung sichergestellt werden, die durch ein schaltbares Ventil, jedoch auch automatisch durch eine Druckdose 76 gesteuert werden kann, die auf ein elastisches Schlauchstück 77 einwirkt und bei Vorliegen eines gewissen Differenzdruckes bei gefülltem Raum 56 die Bypass-Leitung durch Abdrücken des Schlauches 77 schließt.

Ein Druckfühler 78 im Wärmeträgerkreislauf am Ausgang des Fensterelementes 14 kann eine Warnanlage 79 betätigen, die außer einer Kontrollfunktion für evtl. Undichtigkeiten im Fensterelement 14 eine Einbruchwarnanlage darstellt, da sie sofort anspricht, wenn die Fensterscheibe zerstört wird.

In Fig. 7 ist eine abgewandelte Ausführungsform eines Fensterelementes 14' dargestellt. In der schematischen Darstellung ist übertrieben dargestellt, daß die beiden Scheiben 51' nicht parallel zueinander angeordnet sind, sondern einen sich nach unten erweiternden konischen Schlitz freilassen. In diesem Falle sind an der oberen und unteren Kante des eingeschlossenen Raumes 56' Siebe 52', 52'' vorgesehen, und die beispielsweise kugelförmigen Absorptionskörper haben ein geringeres spezifisches Gewicht als das Wärmeträgermedium. Sie sind im Ruhezustand im Bereich des oberen Siebes 52' gesammlt und werden durch die Strömung nach unten mitgenommen. Dabei sind jetzt verschiedene Ausführungsformen, je nach den Wünschen und Erfordernissen möglich. Die Absorptionskörper haben in gewünschter Sortierung unterschiedliches spezifisches Gewicht und/oder unterschiedliche Größe. Durch die sich dabei ergebenden unterschiedlichen Verhältnisse zwischen Auftriebskraft und Strömungswiderstand werden die einzelnen Teile bei unterschiedlicher Strömungsgeschwindigkeit von der Strömung mitgenommen. Da
sich die Strömungsgeschwindigkeit in dem konischen Spalt von
oben nach unten verringert, werden also die leichteren und/
oder kleineren Teile bis in den unteren Bereich mitgenommen,
während die schwereren und/oder größeren Teile im
oberen Bereich bleiben. Dies ändert sich ebenfalls mit der
Gesamt-Strömungsgeschwindigkeit, so daß auch hier eine veränderliche Verdunklung möglich ist. Es ist zu erkennen, daß
durch unterschiedliche Kombination der Faktoren,wie Konizität,
Größen- und Gewichtssortierung,die unterschiedlichsten Effekte
möglich sind. So kann beispielsweise erreicht werden, daß erst
bei einer gewissen Mindestgeschwindigkeit überhaupt eine Verdunklung eintritt, es kann ein Rollo-Effekt mit stärkerer Verdunklung im oberen Teil des Fensters erzielt werden, und es
könnten auch verschiedene Farbgebungen über die Höhe des
Fensters erreicht werden. Es ist auch möglich, die Absorptionskörper mit Stoffen zu beschichten, die eine Wärme/Licht-Umsetzungscharakteristik haben, z.B. fluoreszierenden Stoffen.

In Fig. 8 ist eine Ausführungsform dargestellt, bei der ein
im übrigen in gleicher Weise ausgebildeter Speicher 15a benutzt wird, wie die vorher beschriebenen Speicher. Dort ist
aber kein Fensterelement vorgesehen, und die Einrichtung ist
in der dargestellten Form nur zur Raumheizung vorgesehen. In
diesem Falle ist das im Warmbereich 30 des Speichers angeordnete Wärmepumpenaggregat 39 mit einem ebenfalls in diesem Bereich liegenden Kondensator verbunden, während der Verdampfer
von einem Konvektions-Wärmekollektor 21a und einem Platten-
Wärmekollektor (Sonnenkollektor) 19a und einem nachgeschalteten
Wärmeaustauscher 36a im Kaltbereich 31 des Speichers gebildet
wird. Der Sonnenkollektor ist vorzugsweise mit einer relativ
dünnen und mehrschichtigen Kunststoffabdeckung 80 überdeckt,
die einerseits Konvektionsverluste am Strahlungs-Wärmekollektor 19a vermeidet, dessen sonnenabgekehrte Rückseite isoliert ist, und verhindert andererseits weitgehend eine Vereisung
des Platten-Wärmekollektors, die die Leistung mindern und
als Gebäudefassadenelement optisch stören würde.

Bei dieser Ausführung ist es natürlich auch möglich, die Wärmepumpe umgesteuert zu Kühlungszwecken zu fahren, wobei dann
ein Raumkühler vorgesehen wäre, und/oder Brauchwasseranschlüsse
etc. vorzusehen.

Diese Ausführung hat den Vorteil, daß sie bei besonders einfachem Aufbau direkt mit dem Kältemittel in die außenliegenden
Wärmekollektoren geht, so daß keine die Entropie erhöhenden
Übertragungsverluste auftreten. Auch hier sorgt wieder der
zweigeteilte Speicher dafür, daß sich bei normalem Betrieb
eine Wärmeschichtung bilden kann, die eine Speicherung sowohl
der bereits von der Wärmepumpe auf ein anderes Niveau gehobenen
Wärmemenge, als   auch der Wärme vom niedrigeren Niveau möglich ist, um für einen kostensparenden und gleichmäßigen Einsatz der Wärmepumpe 39 zu sorgen.

Die gesamte Einheit hat den Vorteil, daß sie als dezentrale
Anlage einfach aufgestellt werden kann und auch ohne größere
Installationskosten in älteren, nicht darauf eingerichteten
Bauten untergebracht werden kann. Die durchschnittliche Nutzungszahl, d.h. das Verhältnis von nutzbarer Heizungs- oder Kühlungsenergie zur aufgewendeten elektrischen Leistung, liegt so hoch
(in den meisten Fällen erheblich über 3), daß zusammen mit dem
Nachtstrombetrieb nicht nur kostenmäßig, sondern auch gesamtwirtschaftlich eine Einsparung gegenüber der Öl- oder Kohlebeheizung gegeben ist. Durch die Möglichkeit, die Einheit unmittelbar in die Wand mit einzubeziehen und sogar ganze Wandelemente durch sie zu ersetzen, werden die Investitionskosten
teilweise durch Einsparungen am übrigen Baukörper und an der
Heizungsinstallation       mehr als ausgeglichen.

- 1 -

Ansprüche

1. Einrichtung zur Raumklimatisierung und/oder Wärmenutzung unter Verwendung von Umgebungsenergie mit einem Speicher (15, 15a) für flüssiges Speichermedium und daran angeschlossenen Wärme- und Kälteverbrauchern (23, 26, 35), und mit wenigstens einem Wärmekollektor (14, 17) und einer Wärmepumpe (39) mit einem Kondensator (40) und einem Verdampfer (41), dadurch gekennzeichnet, daß die Einrichtung (11) einschließlich des Speichers (15, 15a) eine dezentrale, im zu klimatisierenden Raum (13) aufstellbare bzw. montierbare Einheit ist, an die der Wärmekollektor (17) anschließbar ist, und daß der Speicher in zwei Behälterbereiche für Speichermedium mit hoher und niedriger Temperatur (Warmbereich 30 und Kaltbereich 31) aufgeteilt ist, die miteinander verbunden sind, daß der Kondensator (40) im Warmbereich (30) und der Verdampfer (41) zumindest teilweise im Kaltbereich (31) liegt.

2. Einrichtung nach Anspruch 1, dadurch gekennzeichnet, daß der Warmbereich (30) vertikal über dem Kaltbereich (31) im gleichen Behälter übereinanderliegend angeordnet ist und beide Bereiche durch eine ständig offene Verbindungsöffnung (29) miteinander verbunden sind, indem vorzugsweise die Behälterwände (27) im Bereich der Verbindungsöffnung (29) zum Behälterinneren hin in Form einer Einschnürung (28) vorspringen und eine im Vergleich zur Behälterbasisfläche kleine, insbesondere schlitzförmige Verbindungsöffnung (29) frei lassen.

3. Einrichtung nach Anspruch 2, dadurch gekennzeichnet, daß die Behälterwände (27) einschließlich der die Verbindungsöffnung (29) begrenzenden Einschnürung (28) aus einem vorzugsweise blasgeformten, schaumstoffisolierten Kunststoffbehälter bestehen.

4. Einrichtung nach einem der vorhergehenden Ansprüche, dadurch gekennzeichnet, daß der Verdampfer (41) und Kondensator (40) in vertikaler Richtung nahe und in horizontaler Richtung möglichst weit von der Verbindungsöffnung (29) angeordnet sind und daß vorzugsweise die in Bodennähe des Kaltbereiches angeordneten Rohre eines an den Wärmekollektor angeschlossenen Wärmetauschers (36) mit den im oberen Teil des Kaltbereiches (31) angeordneten Rohren des Verdampfers (41) durch Wärmeleit- und Verteilungsrippen (45) verbunden sind.

5. Einrichtung nach einem der vorhergehenden Ansprüche, dadurch gekennzeichnet, daß die Wärmepumpe (39) vom Speichermedium umgeben im Speicher (15, 15a) angeordnet ist.

6. Einrichtung nach einem der vorhergehenden Ansprüche, dadurch gekennzeichnet, daß das Volumen des Warmbereiches (30) des Speichers (15, 15a) größer, vorzugsweise etwa doppelt so groß ist wie das des Kaltbereiches (31).

7. Einrichtung nach Anspruch 1, dadurch gekennzeichnet, daß der Verdampfer aus dem Wärmekollektor (19a) und einem nachgeschalteten Wärmetauscher (36a) im Kaltbereich (31) des Speichers (15a) besteht, wobei vorzugsweise der Wärmekollektor (19a) ein Platten-Wärmetauscher ist, der im Abstand von wenigstens einer strahlungsdurchlässigen Abdeckung (80) überdeckt ist und mit dem gegebenenfalls ein hinter ihm angeordneter Konvektions-Wärmetauscher (21a) in Reihe geschaltet ist.

8. Einrichtung nach einem der vorhergehenden Ansprüche, dadurch
gekennzeichnet, daß der Speicher (15) als ein Außenwandelement
ausgebildet ist, an dem innen Raumheizkörper (23) und außen
der Wärmekollektor (17) sowie gegebenenfalls darüber ein
als Wärmekollektor ausgebildetes Fenster (14) montiert sind.

9. Einrichtung nach einem der vorhergehenden Ansprüche, dadurch
gekennzeichnet, daß im Warmbereich (30) ein zusätzlicher,
vorzugsweise elektrischer Heizkörper (43) vorgesehen ist,
und/oder im Kaltbereich ein an eine Wärmemediumquelle mit niedrigem Temperaturniveau (Abfallwärme) anschließbarer Wärmetauscher (44) angeordnet ist.

10. Einrichtung nach einem der vorhergehenden Ansprüche, dadurch gekennzeichnet, daß im Warmbereich ein Wärmetauscher (46)
angeordnet ist, dessen Rohr von im oberen Teil des Warmbereichs liegenden Anschlüssen in den unteren des Warmbereichs
reicht.

11. Einrichtung, insbesondere nach einem der vorhergehenden Ansprüche, dadurch gekennzeichnet, daß ein gegebenenfalls mit
einem anderen Wärmekollektor in Reihe schaltbarer Wärmekollektor von einem von flüssigem Wärmeträgermedium im wesentlichen
vertikal durchströmten Innenraum (56) zwischen zwei Fensterscheiben (51) eines Fensters (14) gebildet wird und daß Absorptionskörper (67) mit von dem Wärmeträgermedium unterschiedlichem spezifischen Gewicht mittels einer, vorzugsweise
nach Art einer Wasserstrahlpumpe arbeitenden Beimischungseinrichtung in von der Strömungsgeschwindigkeit abhängiger Menge in das Wärmeträgermedium einbringbar und von diesem vorteilhaft über eine Siebeinrichtung zur Wiederverwendung trennbar sind.

12. Einrichtung nach Anspruch 11, dadurch gekennzeichnet, daß die Absorptionskörper (67) in einer Ebene Abmessungen haben, die größer sind als der Abstand zwischen den den Innenraum (56) begrenzenden Fensterscheiben (51) und in einer Richtung kleinere Abmessungen haben als dieser Abstand, und daß die Absorptionskörper (67) an ihren beiden den Fensterscheiben (51) zugekehrten Flächen (68, 69) unterschiedliche Absorptionskoeffizienten haben.

13. Einrichtung nach Anspruch 11 oder 12, dadurch gekennzeichnet, daß der Abstand zwischen den Fensterscheiben (51') sich in vertikaler Richtung erweitert, daß oben und unten Siebmittel (51', 51'') angeordnet sind und daß die Absorptionskörper unterschiedliches spezifisches Gewicht und/oder unterschiedliche Größe haben.

14. Einrichtung nach einem der Ansprüche 11 bis 13, dadurch gekennzeichnet, daß eine vorzugsweise von einem im Fensterbereich angeordneten Licht- und/oder Wärmefühler regelbare Steuereinrichtung vorgesehen ist, die eine Umwälzpumpe für das Wärmeträgermedium steuert.

15. Einrichtung nach einem der Ansprüche 11 bis 14, dadurch gekennzeichnet, daß das Wärmeträgermedium in dem zwischen den Fensterscheiben (51, 51') gebildeten Raum (56, 56') unter einem geringeren Druck als dem Atmosphärendruck steht und daß die Fensterscheiben (51, 51') durch im wesentlichen in Strömungsrichtung verlaufende Zwischenstege verbunden sind, die Strömungsleitstege bilden.

16. Einrichtung nach Anspruch 15, dadurch gekennzeichnet, daß eine Warnanlage (79) mit einem auf den im Raum herrschenden Druck ansprechenden Druckfühler (78) vorgesehen ist.

17. Einrichtung nach einem der Ansprüche 11 bis 16, dadurch gekennzeichnet, daß die den durchströmten Innenraum (56) einschließenden Fensterscheiben (51) ebenfalls zwischen zwei Fensterscheiben (50) eingeschlossen sind.

18. Einrichtung nach einem der Ansprüche 11 bis 17, dadurch gekennzeichnet, daß der Kreislauf des Wärmeträgermediums bei Entleerung des zwischen den Fensterscheiben (51) befindlichen Raums (56) kurzschließbar ist und vorzugsweise daß zum Füllen und Entleeren des zwischen den Fensterscheiben gebildeten Raumes (56) der obere Abschnitt dieses Raumes an eine in einem Aufnahmebehälter (72) für aus dem Raum abgezogenes Wärmeträgermedium angeordnete luftgefüllte elastische Blase (71) angeschlossen ist und daß der Aufnahmebehälter an eine zum Füllen betätigbare Pumpe (74) angeschlossen ist.

FIG.1

FIG.2

FIG. 3

FIG. 4

FIG. 5

FIG. 6

FIG. 7

FIG. 8

0033530

Europäisches Patentamt

**EUROPÄISCHER RECHERCHENBERICHT**

Nummer der Anmeldung
EP 81100699.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A1 - 2 638 834 (LOTZ) <br><br> + Seite 4, 1. Absatz bis Seite 5, 2. Absatz + <br><br> -- | 1 |
| | DE - A1 - 2 739 373 (TREADUAC N.V.) <br><br> + Seite 6, 1. Absatz bis Seite 11, 2. Absatz + <br><br> ---- | 1,5,7 |

**KLASSIFIKATION DER ANMELDUNG (Int. Cl.³)**

F 24 J 3/04

**RECHERCHIERTE SACHGEBIETE (Int. Cl.³)**

F 24 J 3/00
F 25 B 13/00
F 24 F 1/00
F 24 F 5/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 12-05-1981 | ENDLER |

EPA form 1503.1   06.78